# EUROPÄISCHE PATENTSCHRIFT

(11) **EP 3 033 855 B1**
(45) Veröffentlichungstag und Bekanntmachung des Hinweises auf die Patenterteilung: **02.11.2016**
(21) Anmeldenummer: 14741870.1
(22) Anmeldetag: 21.07.2014
(51) Int. Cl.: H04L 9/08, H04L 29/06, H04L 9/14

(54) **UNTERSTÜTZUNG EINER ENTSCHLÜSSELUNG VON VERSCHLÜSSELTEN DATEN**
SUPPORT FOR DECRYPTION OF ENCRYPTED DATA
ASSISTANCE À UN DÉCHIFFREMENT DE DONNÉES CHIFFRÉES

(30) Priorität: 12.08.2013 DE 102013108714
(43) Veröffentlichungstag der Anmeldung: 22.06.2016
(73) Patentinhaber: Deutsche Post AG, 53113 Bonn (DE)
(72) Erfinder: BOBINSKI, Mike, 53113 Bonn (DE); PABEL, Jürgen, Köln 50858 (DE)
(74) Vertreter: Cohausz & Florack
(86) Internationale Anmeldenummer: PCT/EP2014/065613
(87) Internationale Veröffentlichungsnummer: WO 2015/022150

(56) Entgegenhaltungen:
- US-A1- 2002 126 850
- US-A1- 2011 293 098
- US-B1- 8 458 494
- NN: "De-Mail Sicherer elektronischer Datenverkehr - einfach und nachweisbar", INTERNET CITATION, 12. März 2012 (2012-03-12), Seiten 1-3, XP002715696, Gefunden im Internet: URL:https://www.bsi.bund.de/SharedDocs/Dow nloads/DE/BSI/Egovernment/De_Mail/De-Mail- Broschuere.pdf?__blob=publicationFile [gefunden am 2013-10-30]

## Beschreibung

### Gebiet der Erfindung

Die vorliegende Erfindung betrifft unter anderem Verfahren, Vorrichtungen, Systeme, Programme und Speichermedien zum Unterstützen einer Entschlüsselung von verschlüsselten Daten.

### Hintergrund der Erfindung

Daten können heutzutage digital, beispielsweise als Email, versendet werden. Dabei eignet sich der herkömmliche Emailversand aus diversen Gründen nicht für vertrauliche Informationen. Zum einen sind weder Absender, noch Empfänger zweifelsfrei identifizierbar. Das bedeutet, dass der Empfänger einer Email nicht sicher sein kann, dass der Absender tatsächlich die Person oder Institution ist, die als Absender angegeben ist. Zum anderen wird die Information offen übertragen, was bedeutet, dass Fehlläufer von dem irrtümlichen Empfänger gelesen werden können. Zusätzlich kann der Provider der Emailfunktion, über dessen Server die Email übertragen wird, die Information aus der Email zur Kenntnis nehmen.

Der Inhalt von elektronischen Nachrichten kann über eine Ende-zu-Ende Verschlüsselung geschützt werden, so dass die Nachricht während des Transports vom Absender zum Empfänger von keinem Dritten gelesen werden kann. Hierbei muss ein Absender eine Nachricht oder einen Teil einer Nachricht kryptografisch verschlüsseln, und der Empfänger muss die Nachricht entschlüsseln. Die Verschlüsselung kann eine symmetrische Verschlüsselung sein; in dem Fall basieren Verschlüsselung und Entschlüsselung auf dem gleichen Schlüssel. Alternativ kann die Verschlüsselung eine asymmetrische Verschlüsselung sein; in dem Fall kann die Verschlüsselung auf einem öffentlichen Schlüssel eines Schlüsselpaars basieren und die Entschlüsselung auf dem privaten Schlüssel des Schlüsselpaars. Herkömmlicherweise muss der Empfänger seinen Schlüssel oder seine Schlüssel eigenständig verwalten und schützen, letzteres sowohl vor einem Verlust wie auch vor einem unbefugten Auslesen durch Dritte. Zudem muss er dem Absender den zur Verschlüsselung notwendigen Schlüssel zugänglich machen. Außerdem sind auf Empfängerseite die Installation von Softwaremodulen und gegebenenfalls zusätzliche Geräte, wie Kartenlesegeräte, erforderlich.

Ein Trustcenter kann die Schlüsselgenerierung und -verwaltung unterstützen. Insbesondere kann ein Trustcenter Empfängern eine gesicherte Aufbewahrung von Schlüsseln anbieten, um den Verlust eines Schlüssels zu verhindern. Hierzu muss der Empfänger jedoch nicht nur ein Vertragsverhältnis mit einem Email-Provider oder einem anderen Nachrichtenzusteller, sondern zusätzlich noch ein Vertragsverhältnis mit dem Trustcenter eingehen. Ein Absender muss gegebenenfalls Schlüssel für mehrere Empfänger von mehreren Trustcentern abrufen und sicherstellen, dass er den jeweils korrekten Schlüssel des Empfängers bei der Verschlüsselung einer Nachricht verwendet. Ein Trustcenter kann zusätzlich Zertifikate für elektronische Signaturen zur Bescheinigung der Identität eines Kommunikationspartners ausstellen.

In einer Variante kann ein Nachrichtenzusteller als Komplettanbieter für eine sichere Nachrichtenübermittlung auftreten. Die Anmelderin bietet ein solches Verfahren beispielsweise mit dem E-Postbrief an. Sowohl der Empfänger als auch der Absender benötigen dann nur einen Vertrag mit dem Nachrichtenzusteller, und sie erhalten alle notwendigen Funktionen für eine gesicherte Kommunikation bereitgestellt. Ein Trustcenter kann dabei einen Schlüssel für einen Nutzer erstellen, der dann von dem Nachrichtenzusteller verwaltet wird. Ein Absender kann von dem Nachrichtenzusteller die benötigten Schlüssel erhalten und dort auch Nachrichten einliefern. Um keinerlei technischen oder organisatorischen Maßnahmen auf Seiten des Empfängers vorauszusetzen, können die verschlüsselten Nachrichten auf Seiten des Nachrichtenzustellers bei Abruf der Nachricht durch den Empfänger bereits auf einem Server des Nachrichtenzustellers entschlüsselt und dem Empfänger über eine gesicherte Verbindung übertragen werden. Durch hohe Anforderungen an die Identifikation der Teilnehmer und die Bereitstellung eines Adressqualifikations-Dienstes kann der Nachrichtenübermittler für den Absender auch die Empfängeradresse bestimmen oder überprüfen und eine korrekte Zustellung sicherstellen.

US 2011/293098 offenbart einen Schlüsselwiedererlangungsprozess für einen verlorengegangenen oder beschädigten Schlüssel, wobei ein Passwort von einem Nutzer eingegeben werden muss.

### Allgemeine Beschreibung einiger beispielhafter Ausführungsformen der Erfindung

Eine der Aufgaben der Erfindung besteht darin, eine Entschlüsslung von verschlüsselten Daten auf eine alternative Weise zu bestehenden Ansätzen zu unterstützen. Eine andere Aufgabe der Erfindung besteht darin, eine besonders nutzerfreundliche und gleichzeitig besonders sichere Entschlüsselung von verschlüsselten Daten zu ermöglichen.

Die Aufgabe wird gelöst durch ein Verfahren gemäß Anspruch 1, eine Vorrichtung gemäß Anspruch 4 ein Programm gemäß Anspruch 6, ein Verfahren gemäß Anspruch 7, eine Vorrichtung gemäß Anspruch 15, ein Programm gemäß Anspruch 17 und ein System gemäß Anspruch 18.

Weitere Ausführungsformen sind den abhängigen Ansprüchen zu entnehmen.

Für einen ersten Aspekt wird für eine beispielhafte Ausführungsform eines Verfahrens, ausgeführt von einer Vorrichtung, angenommen, dass eine erste Einrichtung dazu eingerichtet ist, einen geheimen Schlüssel eines Nutzers der Vorrichtung bereitzustellen, und dass eine zweite Einrichtung dazu eingerichtet ist, Daten für den Nutzer bereitzustellen. Das Verfahren umfasst ein Einloggen bei der zweiten Einrichtung unter Authentifizierung des Nutzers. Das Verfahren umfasst ferner ein Empfangen von verschlüsselten Daten von der zweiten Einrichtung. Das Verfahren umfasst ferner ein Erzeugen eines Einmalpassworts. Das Verfahren umfasst ferner ein Verschlüsseln des Einmalpassworts mittels eines öffentlichen Schlüssels der ersten Einrichtung. Das Verfahren umfasst ferner ein Übermitteln des verschlüsselten Einmalpassworts an die zweite Einrichtung und ein Veranlassen der zweiten Einrichtung mittels des verschlüsselten Einmalpassworts und einer in der zweiten Einrichtung dem Nutzer zugeordneten Schlüsselkennung den geheimen Schlüssel des Nutzers von der ersten Einrichtung abzurufen. Das Verfahren umfasst ferner ein Empfangen des von der ersten Einrichtung mit dem Einmalpasswort verschlüsselten geheimen Schlüssels des Nutzers von der zweiten Einrichtung. Das Verfahren umfasst ferner ein Entschlüsseln des geheimen Schlüssels des Nutzers mittels des Einmalpassworts. Das Verfahren umfasst ferner ein Entschlüsseln der verschlüsselten Daten mittels des geheimen Schlüssels des Nutzers.

Für einen zweiten Aspekt wird für eine beispielhafte Ausführungsform eines Verfahrens, ausgeführt von einer Vorrichtung einer ersten Einrichtung, angenommen, dass eine zweite Einrichtung dazu eingerichtet ist, Daten für einen Nutzer bereitzustellen. Das Verfahren umfasst ein Empfangen einer Schlüsselkennung und eines von einer Vorrichtung eines Nutzers generierten und mit einem öffentlichen Schlüssel der ersten Einrichtung verschlüsselten Einmalpassworts von einer zweiten Einrichtung, die eine Zuordnung zwischen Nutzern und Schlüsselkennungen speichert. Das Verfahren umfasst ferner ein Auslesen eines mit der Schlüsselkennung verschlüsselten geheimen Schlüssels des Nutzers basierend auf der Schlüsselkennung aus einem Speicher der ersten Einrichtung. Das Verfahren umfasst ferner ein Entschlüsseln des verschlüsselten geheimen Schlüssels des Nutzers mittels der Schlüsselkennung. Das Verfahren umfasst ferner ein Entschlüsseln des verschlüsselten Einmalpassworts mittels eines privaten Schlüssels der ersten Einrichtung. Das Verfahren umfasst ferner ein Verschlüsseln des geheimen Schlüssels des Nutzers mit dem Einmalpasswort. Das Verfahren umfasst ferner ein Übermitteln des mit dem Einmalpasswort verschlüsselten geheimen Schlüssels des Nutzers an die zweite Einrichtung zum Weiterleiten an die Vorrichtung des Nutzers, um diesem zu ermöglichen, von der zweiten Einrichtung erhaltene, verschlüsselte Daten zu entschlüsseln.

Die Erfindung sieht also für bestimmte beispielhafte Ausführungsformen vor, dass die Bereitstellung von Daten und die Bereitstellung eines geheimen Schlüssels zum Entschlüsseln der Daten voneinander getrennt werden. Der Schlüssel wird von einer ersten Einrichtung bereitgestellt und die Daten von einer zweiten Einrichtung. Die Vorrichtung eines Nutzers kommuniziert dennoch direkt nur mit der zweiten Einrichtung. Die zweite Einrichtung selber weist nur eine Zuordnung des Nutzers zu einer Schlüsselkennung auf. Der Nutzer kann für diese Zuordnung auf beliebige Weise identifiziert werden, beispielsweise anhand eines beim Einloggen angegebenen Nutzernamens oder einer Nutzeradresse für elektronische Nachrichten. Verschlüsselte Daten für den Nutzer werden der Nutzervorrichtung von der zweiten Einrichtung in verschlüsselter Form übermittelt. Die Nutzervorrichtung generiert ein Einmalpasswort, verschlüsselt dieses mit einem öffentlichen Schlüssel der ersten Einrichtung und leitet es an die zweite Einrichtung weiter. Die zweite Einrichtung leitet das verschlüsselte Einmalpasswort zusammen mit einer für den Nutzer gespeicherten Schlüsselkennung an die erste Einrichtung weiter. Die erste Einrichtung entschlüsselt das Einmalpasswort, ruft anhand der Schlüsselkennung einen gespeicherten, verschlüsselten geheimen Schlüssel des Nutzers ab, entschlüsselt ihn mit der Schlüsselkennung und verschlüsselt ihn mit dem Einmalpasswort. Die erste Einrichtung leitet den so neu verschlüsselten geheimen Schlüssel des Nutzers über die zweite Einrichtung an die Nutzervorrichtung weiter. Nach einer Entschlüsselung des geheimen Schlüssels mit dem Einmalpasswort kann die Nutzervorrichtung nun die verschlüsselten Daten entschlüsseln.

Ein möglicher Vorteil der Erfindung liegt darin, dass der Nutzer selber keinen geheimen Schlüssel in seiner Vorrichtung vorrätig halten muss. Dadurch braucht der Nutzer nicht dafür Sorge zu tragen, dass der geheime Schlüssel sicher vor dem Zugriff anderer verwahrt ist und dass er nicht verlorengeht. Außerdem kann der Nutzer so gegebenenfalls über mehrere Vorrichtungen auf den gleichen, zentral gespeicherten geheimen Schlüssel zugreifen. Ein weiterer möglicher Vorteil der Erfindung liegt darin, dass der Nutzer dennoch nur mit einer Einrichtung kommunizieren muss; tritt der Betreiber der zweiten Einrichtung dabei als Komplettdienstleister auf, so benötigt der Nutzer in bestimmten Ausführungsformen auch nur einen Vertrag mit diesem. Ein weiterer möglicher Vorteil der Erfindung liegt darin, dass bei Verwendung eines Einmalpassworts für den Transport des geheimen Schlüssels für die Generierung des Passworts in bestimmten Ausführungsformen keine Nutzereingabe erforderlich ist. Der Ansatz könnte somit besonders komfortabel für den Nutzer ausgestaltet werden und unabhängig von dem Login-Verfahren sein, mit dem sich ein Nutzer bei der zweiten Einrichtung zum Abruf von Daten anmeldet.

Für besonders vertrauliche Informationen können besonders hohe Anforderungen an eine Absicherung bestehen, dass nur der beabsichtigte Empfänger die bereitgestellten Informationen nutzen kann. Dies kann beispielsweise Berufsgeheimnisse von bestimmten Berufsgruppen, wie Ärzten oder Anwälten, betreffen, die besonderen Geheimhaltungspflichten unterliegen. Ein weiterer möglicher Vorteil der Erfindung liegt nun darin, dass durch die Trennung zwischen Datenbereitstellung und Schlüsselbereitstellung trotz des Zugriffs des Nutzers auf eine einzige Einrichtung eine besonders hohe Sicherheit bezüglich der Vertraulichkeit erzielt werden kann. Das heißt, keine Einrichtung speichert sowohl verschlüsselte Daten als auch den für die Entschlüsselung erforderlichen geheimen Schlüssel - auch nicht in verschlüsselter Form. Die Entschlüsselung erfolgt ausschließlich im Machtbereich des Empfängers, d.h. auf der Nutzervorrichtung. Das Einmalpasswort kann sicherstellen, dass der geheime Schlüssel des Nutzers auch während der Übertragung zum Nutzer über die zweite Einrichtung gesichert ist. Da das Einmalpasswort selber bei der Übertragung zur ersten Einrichtung über die zweite Einrichtung verschlüsselt ist, erhält die zweite Einrichtung auch zu keinem Zeitpunkt einen Zugriff auf das Einmalpasswort.

Eine beispielhafte erfindungsgemäße Vorrichtung gemäß dem ersten Aspekt umfasst Mittel zur Ausführung des erfindungsgemäßen Verfahrens gemäß dem ersten Aspekt. Die Vorrichtung kann beispielsweise ein Nutzerendgerät oder ein Modul für ein Nutzerendgerät sein.

Eine beispielhafte erfindungsgemäße Vorrichtung gemäß dem zweiten Aspekt umfasst Mittel zur Ausführung des erfindungsgemäßen Verfahrens gemäß dem zweiten Aspekt. Die Vorrichtung kann beispielsweise ein Server oder ein Modul für einen Server sein. Der Server kann wiederum beispielsweise zu einer Einrichtung, wie einem Trustcenter, gehören.

Die Mittel der Vorrichtungen gemäß dem ersten bzw. zweiten Aspekt könnten jeweils Hardware- und/oder Softwarekomponenten umfassen. In einer beispielhaften Ausführungsform könnten die Mittel nur einen Schaltkreis umfassen, in dem entsprechende Funktionen hardwaremäßig implementiert sind. In einer anderen beispielhaften Ausführungsform könnten die Mittel zumindest einen Prozessor und zumindest einen Speicher mit einem geeigneten Programm umfassen.

So umfasst für den ersten bzw. den zweiten Aspekt eine beispielhafte Ausführungsform einer erfindungsgemäßen Vorrichtung zumindest einen Prozessor und zumindest einen Speicher, wobei in dem Speicher ein Programmanweisungen umfassendes Programm gespeichert ist, und wobei der Speicher und das Programm eingerichtet sind, um, mit dem Prozessor, die Vorrichtung zumindest zu veranlassen, das erfindungsgemäße Verfahren gemäß dem ersten Aspekt oder gemäß dem zweiten Aspekt auszuführen, wenn das Programm auf dem Prozessor ausgeführt wird. Die Vorrichtung ist beispielsweise softwaremäßig eingerichtet, um das Verfahren ausführen zu können. Unter softwaremäßig eingerichtet soll dabei insbesondere die Vorbereitung der Vorrichtung verstanden werden, die notwendig ist, um ein Verfahren beispielsweise in Form eines Programms auf dem Prozessor ausführen zu können.

Unter einem Prozessor sollen unter anderem eine oder mehrere Kontrolleinheiten, Mikroprozessoren, Mikrokontrolleinheiten wie Mikrocontroller, digitale Signalprozessoren (DSP), Anwendungsspezifische Integrierte Schaltungen (ASIC) oder Field Programmable Gate Arrays (FPGA) verstanden werden.

Ein Speicher ist beispielsweise ein Programmspeicher und/oder ein Hauptspeicher des Prozessors. Unter einem Programmspeicher soll unter anderem ein nicht-flüchtiger Speicher und unter einem Hauptspeicher ein flüchtiger oder ein nicht-flüchtiger Speicher, insbesondere ein Speicher mit wahlfreiem Zugriff (Random Access Memory RAM) und/oder ein Flash-Speicher, verstanden werden. Nicht-flüchtige Speicher sind z.B. Speicher mit wahlfreiem Zugriff (RAM) wie z.B. NOR-Flash-Speicher oder mit sequentiellem Zugriff wie z.B. NAND-Flash-Speicher und/oder Speicher mit Nur-Lese-Zugriff (ROM) wie z.B. EPROM-, EEPROM-, oder ROM-Speicher. Der Speicher kann beispielsweise gegenständlich ausgebildet sein.

Für den ersten bzw. den zweiten Aspekt umfasst eine beispielhafte Ausführungsform eines erfindungsgemäßen Programms Programmanweisungen, wobei die Programmanweisungen eine Vorrichtung zur Ausführung des erfindungsgemäßen Verfahrens gemäß dem ersten Aspekt oder gemäß dem zweiten Aspekt veranlassen, wenn das Programm von dem Prozessor ausgeführt wird. Ein Programm ist beispielsweise über ein Netz wie ein lokales Netz, ein Weitverkehrsnetz, ein virtuelles Netz, ein Funknetz, wie ein Mobilfunknetz, ein sonstiges Telefonnetz und/oder das Internet verteilbar. Ein Programm kann zumindest teilweise Software und/oder Firmware eines Prozessors sein. Zum Beispiel ist das erfindungsgemäß Programm in einem Speicher der erfindungsgemäßen Vorrichtung gemäß dem ersten bzw. zweiten Aspekt gespeichert. Es versteht sich, dass unter dem Begriff Programm jeweils auch eine Zusammenstellung mehrerer Programme verstanden werden kann.

Für den ersten bzw. den zweiten Aspekt speichert eine beispielhafte Ausführungsform eines erfindungsgemäßen Speichermediums ein erfindungsgemäßes Programm gemäß dem ersten oder zweiten Aspekt. Das Speichermedium ist beispielsweise ein computerlesbares Speichermedium, welches das erfindungsgemäße Programm enthält und zum Beispiel als magnetisches, elektrisches, elektro-magnetisches, optisches und/oder andersartiges Speichermedium ausgebildet ist. Das Speichermedium kann insbesondere ein physikalisches und/oder gegenständliches Speichermedium sein. Das Speichermedium ist beispielsweise tragbar oder in einer Vorrichtung fest installiert. "Computerlesbar" soll insbesondere so verstanden werden, dass das Speichermedium von einem Computer bzw. einer Datenverarbeitungsvorrichtung (aus)gelesen und/oder beschrieben werden kann, beispielsweise von einem Prozessor. Das Speichermedium ist beispielsweise ein Programmspeicher eines Prozessors.

In einer beispielhaften Ausführungsform umfasst ein erfindungsgemäßes System eine erste Einrichtung mit einer Vorrichtung gemäß dem zweiten Aspekt und einen Speicher zum Speichern einer Mehrzahl von mit Schlüsselkennungen verschlüsselten geheimen Schlüsseln von Nutzern. Des Weiteren kann das System beliebige weitere Komponenten umfassen, beispielsweise die zweite Einrichtung und/oder eine Vorrichtung gemäß dem ersten Aspekt.

In einer beispielhaften Ausführungsform wird die Vorrichtung gemäß dem ersten Aspekt von in einem lokalen Speicher der Vorrichtung dauerhaft gespeicherten und von einem Prozessor der Vorrichtung ausgeführten Programmanweisungen veranlasst, das Verfahren durchzuführen. In einer beispielhaften Ausführungsform wird die Vorrichtung gemäß dem ersten Aspekt von über einen Browser erhaltenen und von einem Prozessor der Vorrichtung ausgeführten Programmanweisungen veranlasst, das Verfahren durchzuführen. Die Programmanweisungen können beispielsweise von der zweiten Einrichtung in Form eines Java-Applets oder einer anderen Anwendung bereitgestellt und in der Vorrichtung lediglich temporär in einem Arbeitsspeicher zwischengespeichert werden. Dies kann den Vorteil bieten, dass eine Installation eines Programms mit den Programmanweisungen sowie Aktualisierungen eines installierten Programms nicht erforderlich ist.

Für den zweiten Aspekt kann in einer beispielhaften Ausführungsform der mit der Schlüsselkennung verschlüsselte geheime Schlüssel des Nutzers in dem Speicher der ersten Einrichtung mit Zuordnung zu einem aus der Schlüsselkennung kryptografisch abgeleitetem Wert abgespeichert sein. In der ersten Einrichtung könnte dann für eine empfangene Schlüsselkennung zunächst ein Wert kryptografisch abgeleitet werden. Das Auslesen des mit der Schlüsselkennung verschlüsselten geheimen Schlüssels des Nutzers könnte dann anhand des kryptografisch abgeleiteten Werts der empfangenen Schlüsselkennung erfolgt. Die Abspeicherung des verschlüsselten geheimen Schlüssels mit Zuordnung zu einem kryptografisch abgeleiteten Wert der Schlüsselkennung kann den Vorteil bieten, dass nur mit Kenntnis der Schlüsselkennung der geheime Schlüssel noch nicht ohne weiteres aus einem Speicher der ersten Einrichtung abgerufen werden kann. Ein Beispiel für einen kryptografischen abgeleiteten Wert ist ein Hashwert, der mit Hilfe einer Hashfunktion erhalten wird.

Für den zweiten Aspekt kann in einer beispielhaften Ausführungsform ein gespeicherter verschlüsselter geheimer Schlüssel eines Nutzers von der Vorrichtung der ersten Einrichtung zuvor erzeugt werden, wenn von der zweiten Einrichtung eine Aufforderung empfangen wird, einen geheimen Schlüssel für einen Nutzer zu erzeugen. Die Vorrichtung der ersten Einrichtung kann dann einen geheimen Schlüssel für einen Nutzer erzeugen, insbesondere unabhängig von einer Nutzereingabe. Die Vorrichtung der ersten Einrichtung kann ferner eine Schlüsselkennung für den geheimen Schlüssel für den Nutzer erzeugen. Die Vorrichtung der ersten Einrichtung kann den geheimen Schlüssel für den Nutzer mit der Schlüsselkennung verschlüsseln und den verschlüsselten geheimen Schlüssels in der ersten Einrichtung speichern für einen Abruf durch eine Vorrichtung des Nutzers über die zweite Einrichtung. Das Erzeugen eines geheimen Schlüssels für einen Nutzer unabhängig von Nutzereingaben kann den Vorteil bieten, dass für die Erzeugung des Schlüssels keine Kommunikation mit dem Nutzer erforderlich ist.

Es versteht sich, dass diese spezielle Erzeugung eines geheimen Schlüssels für einen Nutzer durch eine Vorrichtung einer ersten Einrichtung auch als eigenständige Erfindung anzusehen ist.

Für den zweiten Aspekt kann in einer beispielhaften Ausführungsform die Schlüsselkennung an die zweite Einrichtung übermittelt werden, zum Speichern der Schlüsselkennung mit Zuordnung zu einem Nutzer. Dies kann den Vorteil bieten, dass die erste Einrichtung für eine Abfrage eines geheimen Schlüssels für einen Nutzer keinerlei direkte Informationen über den jeweiligen Nutzer zu erhalten braucht.

Für den zweiten Aspekt kann in einer beispielhaften Ausführungsform die Vorrichtung der ersten Einrichtung im Rahmen der Erzeugung eines geheimen Schlüssels von der erzeugten Schlüsselkennung einen Wert kryptografischen ableiten, den kryptografisch abgeleiteten Wert in dem Speicher der ersten Einrichtung mit Zuordnung zu dem mit der Schlüsselkennung verschlüsselten geheimen Schlüssel speichern, und die Schlüsselkennung in der ersten Einrichtung löschen. Als kryptografisch abgeleiteter Wert kann beispielsweise wiederum ein Hashwert verwendet werden.

Der geheimen Schlüssel des Nutzers kann beispielsweise ein Schüssel für eine symmetrische Verschlüsselung sein oder beispielsweise der private Schlüssel eines Schlüsselpaars für eine asymmetrische Verschlüsselung.

Für den zweiten Aspekt kann in letzterem Fall die Vorrichtung der ersten Einrichtung ferner einen öffentlichen Schlüssel für den Nutzer erzeugen. Der öffentliche Schlüssel kann dann nur in der ersten Einrichtung abgespeichert werden. Alternativ könnte er zur zweiten Einrichtung zum Abspeichern nur in der zweiten Einrichtung übermittelt werden. Ein Abspeichern in der zweiten Einrichtung könnte den Vorteil haben, dass leichter auf den öffentlichen Schlüssel zugegriffen werden kann, beispielsweise wenn ein anderer Nutzer dem Nutzer mit dem öffentlichen Schlüssel verschlüsselte Daten senden möchte. In der zweiten Einrichtung könnten so auch von verschiedenen ersten Einrichtungen erzeugte öffentliche Schlüssel gespeichert werden. Da der öffentliche Schlüssel nicht geheim ist, kann er ohne weiteres in der zweiten Einrichtung gespeichert und zum Abruf bereitgehalten werden. Aus der ersten Einrichtung könnte der öffentliche Schlüssel wieder nur indirekt über die zweite Einrichtung und damit umständlicher abgerufen werden, da in der ersten Einrichtung vorzugsweise keine Zuordnung des Nutzers zu den gespeicherten Schlüsseln vorhanden ist. Weiter alternativ könnte der öffentliche Schlüssel des Nutzers in der ersten Einrichtung abgespeichert werden und zusätzlich zur zweiten Einrichtung zum Abspeichern in der zweiten Einrichtung übermittelt werden. Dies kann den Vorteil bieten, dass der öffentliche Schlüssel auf einfache Weise direkt von der zweiten Einrichtung abgerufen werden kann, während aber eine Sicherheitskopie in der ersten Einrichtung vorhanden ist.

Die verschlüsselten Daten können von beliebiger Art sein und der zweiten Einrichtung zuvor von beliebiger Seite zur Verfügung gestellt worden sein. In einer beispielhaften Ausführungsform wurden die verschlüsselten Daten von einer Vorrichtung eines Dritten verschlüsselt und der zweiten Einrichtung zur Verfügung gestellt. Hierbei kann es sich beispielsweise um verschlüsselte Teile oder Anhänge von elektronischen Nachrichten handeln. In einer anderen beispielhaften Ausführungsform wurden die verschlüsselten Daten von einer Vorrichtung des Nutzers verschlüsselt und der zweiten Einrichtung zur Verfügung gestellt. Hierbei kann es sich beispielsweise um Daten handeln, die ausgelagert wurden um lokale Speicherkapazitäten zu schonen und/oder um einen zentralen Zugriff auf die Daten zu ermöglichen.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als zwingend notwendiger Bestandteil der vorliegenden Erfindung erachtet werden.

### Kurze Beschreibung der Zeichnungen

In den Figuren zeigt:
- Fig. 1: ein Blockdiagramm einer Ausführungsform eines erfindungsgemäßen Systems;
- Fig. 2: ein Ablaufdiagramme mit ersten beispielhaften Verfahrensschritten in den System aus Figur 1; und
- Fig. 3: ein Ablaufdiagramme mit weiteren beispielhaften Verfahrensschritten in den System aus Figur 1.

### Detaillierte Beschreibung einiger beispielhafter Ausführungsformen der Erfindung

Die vorliegende Erfindung wird im Folgenden anhand von beispielhaften Ausführungsformen beschrieben, die eine Entschlüsselung von verschlüsselten Daten unterstützen.

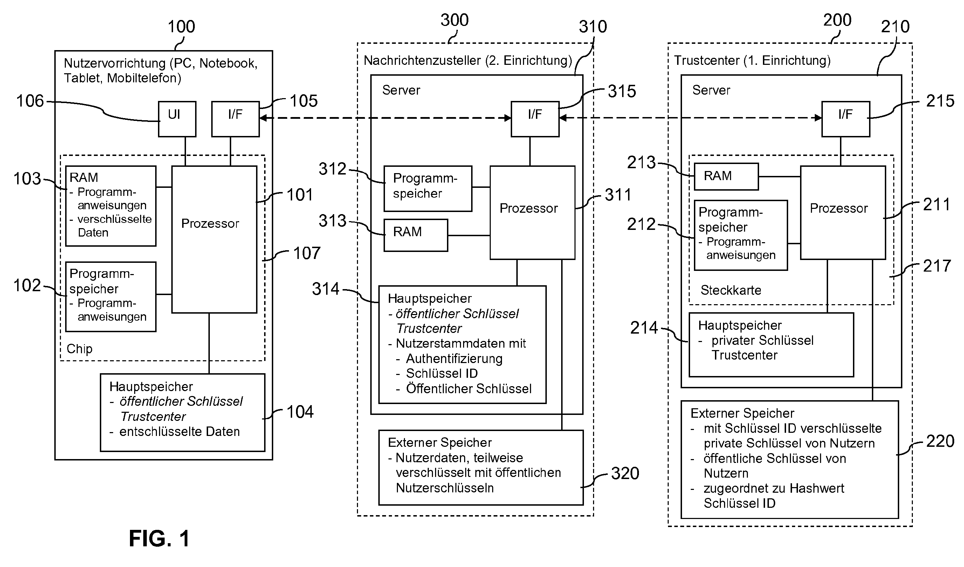

Figur 1 ist ein Blockdiagramm einer beispielhaften Ausführungsform eines erfindungsgemäßen Systems. Das System umfasst eine Vorrichtung 100, eine erste Einrichtung 200 und eine zweite Einrichtung 300.

Die Vorrichtung 100 ist eine Nutzervorrichtung, beispielsweise ein Personal Computer (PC), ein Notebook, ein Tablet-Computer, ein Mobiltelefon oder ein beliebiges anderes Gerät.

Die Vorrichtung 100 umfasst einen Prozessor 101 und, mit dem Prozessor 101 verbunden, einen Programmspeicher 102, einen als RAM ausgebildeten Arbeitsspeicher 103, einen Hauptspeicher 104, eine Kommunikationsschnittstelle (Interface I/F) 105 und eine Benutzerschnittstelle (User Interface UI) 106.

Der Prozessor 101 könnte ein Mikroprozessor sein. Er könnte auch in einen integrierten Schaltkreis (IC) eingebettet sein, zum Beispiel zusammen mit einem Speicher. Beispielhaft angedeutet ist ein Chip 107, der einen Schaltkreis mit dem Prozessor 101, dem Programmspeicher 102 und dem Arbeitsspeicher 103 enthalten könnte.

Der Programmspeicher 102 speichert Programme mit Programmanweisungen dauerhaft, d.h. in der Regel bis ein Nutzer eine Löschung veranlasst. Die Programme umfassen zum Beispiel zumindest ein Browserprogramm. Der Arbeitsspeicher 103 kann beispielsweise dazu genutzt werden, um diverse Informationen, wie Zwischenergebnisse, Programme oder einzelne Programmanweisungen oder zu verarbeitende Daten, zeitweise zu speichern. Der Hauptspeicher 104 kann dazu genutzt werden, um Nutzerdaten und andere Daten dauerhaft zu speichern, beispielsweise aus einem Postfach heruntergeladene elektronische Nachrichten und deren unverschlüsselten oder entschlüsselten Anhänge.

Der Prozessor 101 ist dazu eingerichtet, um Programme auszuführen und damit die Vorrichtung 100 zu veranlassen, bestimmte Aktionen auszuführen. Hierzu kann der Prozessor 101 beispielsweise auf im Programmspeicher 102 gespeicherte Programmanweisungen oder auch auf nur im Arbeitspeicher 103 gespeicherte Programmanweisungen zugreifen. Außerdem können beliebige Informationen vom Prozessor 101 im Arbeitsspeicher 103 zwischengespeichert werden.

Die Kommunikationsschnittstelle 105 kann eine beliebige Schnittstelle sein, die einen Austausch von Daten zwischen der Vorrichtung 100 und der zweiten Einrichtung 300 ermöglicht, insbesondere aber nicht notwendigerweise über das Internet. Sie kann eine Funkschnittstelle sein, die den Zugang zum Internet beispielsweise über ein lokales Funknetz (Wireless Local Area Network WLAN) oder über ein Mobilfunknetz ermöglicht. Sie kann ebenso eine kabelgebundene Schnittstelle sein, die einen Zugang zum Internet über ein Kabel ermöglicht, wie beispielsweise über einen DSL-Anschluss oder ein lokales Netz (Local Area Network LAN).

Die Nutzerschnittstelle 106 kann beliebige Komponenten zur Dateneingabe durch einen Nutzer und zur Präsentation von Daten umfassen, wie zum Beispiel eine Tastatur, eine Maus, ein Mikrofon, einen Bildschirm, einen Touchscreen und/oder einen Lautsprecher, usw. Es versteht sich, dass solche Komponenten in bestimmten Ausführungsformen ganz oder teilweise in die Vorrichtung 100 integriert sein können, aber ebenso über Kabel oder Funk an die Vorrichtung 100 angebunden sein könnten.

Die erste Einrichtung 200 kann beispielsweise ein staatlich zertifiziertes Trustcenter sein.

Die Einrichtung 200 umfasst einen Server 210 und einen externen Speicher 220.

Der Server 210 umfasst einen Prozessor 211 und, mit dem Prozessor 211 verbunden, einen Programmspeicher 212, einen als RAM ausgebildeten Arbeitsspeicher 213, einen Hauptspeicher 214 und eine Kommunikationsschnittstelle (I/F) 215.

Der Prozessor 211 könnte ein Mikroprozessor sein. Er könnte auch in einen integrierten Schaltkreis eingebettet sein, zum Beispiel zusammen mit einem Speicher. Beispielhaft angedeutet ist eine Steckkarte 217, die einen Schaltkreis mit dem Prozessor 211, dem Programmspeicher 212 und dem Arbeitsspeicher 213 enthält.

Der Programmspeicher 212 speichert Programme mit Programmanweisungen, die für den Betrieb des Servers 210 vorgesehen sind, dauerhaft. Der Arbeitsspeicher 213 ist dazu eingereichtet, um Informationen zeitweise zu speichern. Der Hauptspeicher 214 ist dazu eingereichtet, um einen privaten Schlüssel eines Schlüsselpaars des Trustcenters zu speichern.

Der Prozessor 211 ist dazu eingerichtet, um Programme aus dem Programmspeicher 212 auszuführen und damit die erste Einrichtung 200 zu veranlassen, bestimmte Aktionen auszuführen. Hierbei können beliebige Informationen vom Prozessor 211 im Arbeitsspeicher 213 zwischengespeichert werden.

Die Kommunikationsschnittstelle 215 kann eine beliebige Schnittstelle sein, die einen Austausch von Daten zwischen der ersten Einrichtung 200 und der zweiten Einrichtung 300 ermöglicht, beispielsweise aber nicht notwendigerweise über das Internet. Sie kann wiederum eine Funkschnittstelle oder eine kabelgebundene Schnittstelle sein.

Der externe Speicher 220 kann dazu eingerichtet sein, Daten einer Datenbank zu speichern. Die Datenbank kann so angelegt sein, dass jeweils auf einen Datensatz über einen Hashwert einer Schlüsselkennung zugegriffen werden kann. Die einem Hashwert zugeordneten Daten umfassen einen öffentlichen Schlüssel und einen mit der Schlüsselkennung verschlüsselten privaten Schlüssel, wobei öffentlicher Schlüssel und privater Schlüssel ein Schlüsselpaar für einen bestimmten Nutzer bilden. Der private Schlüssel ist dabei ein beispielhafter geheimer Schlüssel eines Nutzers. Der Nutzer ist in der Einrichtung 200 nicht identifizierbar.

Es versteht sich, dass die Einrichtung 200 auch auf beliebige andere Art und Weise zusammengestellt sein kann. So könnte der Speicher 220 auch in den Server 210 integriert sein, oder der Hauptspeicher 214 und der externer Speicher 220 könnten zusammengefasst sein, entweder innerhalb von Server 210 oder außerhalb von Server 210. Der externe Speicher 220 könnte auch von einem weiteren Server bereitgestellt werden.

Die zweite Einrichtung 300 kann beispielsweise eine Einrichtung eines Nachrichtenzustellers sein.

Die Einrichtung 300 umfasst ebenfalls einen Server 310 und einen externen Speicher 320.

Der Server 310 umfasst einen Prozessor 311 und, mit dem Prozessor 311 verbunden, einen Programmspeicher 312, einen als RAM ausgebildeten Arbeitsspeicher 313, einen Hauptspeicher 314 und eine Kommunikationsschnittstelle (I/F) 315.

Der Programmspeicher 312 ist ein Speichermedium, das Programme speichert, die für den Betrieb des Servers 310 vorgesehen sind. Ein Programm könnte insbesondere auch Daten für eine von dem Nachrichtenzusteller bereitgestellte Webseite umfassen. Der Arbeitsspeicher 313 ist dazu eingereichtet, um Informationen zeitweise zu speichern. Der Hauptspeicher 314 ist dazu eingereichtet, um Nutzerstammdaten zu speichern. Zusätzlich könnte der Hauptspeicher 314 einen öffentlichen Schlüssel des Trustcenters 200 speichern, falls nicht vorgesehen ist, dass dieser im Hauptspeicher 104 von Nutzervorrichtungen 100 gespeichert ist.

Der Prozessor 311 ist dazu eingerichtet, um Programme aus dem Programmspeicher 312 auszuführen und damit die zweite Einrichtung 300 zu veranlassen, bestimmte Aktionen auszuführen. Hierbei können beliebige Informationen vom Prozessor 311 im Arbeitsspeicher 313 zwischengespeichert werden.

Die Kommunikationsschnittstelle 315 kann eine beliebige Schnittstelle sein, die einen Austausch von Daten zwischen der zweiten Einrichtung 300 und einer Nutzervorrichtung 100 einerseits sowie der zweiten Einrichtung 300 und der ersten Einrichtung 200 andererseits ermöglicht. Sie kann wiederum eine Funkschnittstelle oder eine kabelgebundene Schnittstelle sein. Es versteht sich, dass für die Kommunikation mit Nutzervorrichtungen und der ersten Einrichtung auch zwei verschiedene Schnittstellen vorgesehen sein können.

Der externe Speicher 320 kann dazu eingerichtet sein, Daten einer Datenbank zu speichern. Die Datenbank kann beispielsweise Postfächer für elektronische Nachrichten für verschiedene Nutzer bereitstellen. Anhänge können optional separat gespeichert werden. Diese können verschlüsselt oder unverschlüsselt sein. Wenn sie verschlüsselt sind, sind sie mit dem öffentlichen Schlüssels eines Schlüsselpaars des Postfachnutzers für verschlüsselt.

Es versteht sich, dass die Einrichtung 300 auch auf beliebige andere Art und Weise zusammengestellt sein kann.

Das System umfasst ein Programm mit Programmanweisungen zum Unterstützen einer Entschlüsselung von verschlüsselten Daten auf Nutzerseite. Das Programm könnte ein Ausführungsbeispiel eines Programms gemäß dem ersten Aspekt der Erfindung sein.

Das Programm könnte in Programmspeicher 102 installiert sein. In diesem Fall könnte der Programmspeicher 102 ein Ausführungsbeispiel eines computerlesbaren Speichermediums gemäß dem ersten Aspekt der Erfindung sein, und die Vorrichtung 100 oder der Chip 107 könnte ein Ausführungsbeispiel einer erfindungsgemäßen Vorrichtung gemäß dem ersten Aspekt sein.

Alternativ könnte das Programm beispielsweise eine Anwendung sein, die dauerhaft in Programmspeicher 312 oder in Hauptspeicher 314 des Servers 310 gespeichert ist, und die von dem Prozessor 101 über einen im Programmspeicher 102 gespeicherten Browser vom Server 310 bei Bedarf jeweils heruntergeladen und im Arbeitsspeicher 103 gespeichert werden kann. Eine solche Anwendung könnte beispielsweise als Java-Applet ausgeführt sein. In dieser Alternative könnte der Programmspeicher 312 bzw. der Hauptspeicher 314 ein Ausführungsbeispiel eines computerlesbaren Speichermediums gemäß dem ersten Aspekt der Erfindung sein, und ebenso der Arbeitsspeicher 103, solange die Anwendung in dem Arbeitsspeicher 103 gespeichert ist. Die Vorrichtung 100 oder der Chip 107 könnte dementsprechend ein Ausführungsbeispiel einer erfindungsgemäßen Vorrichtung gemäß dem ersten Aspekt sein, solange die Anwendung in dem Arbeitsspeicher 103 gespeichert ist.

Das System umfasst ferner ein Programm mit Programmanweisungen zum Unterstützen einer Entschlüsselung von verschlüsselten Daten auf Serverseite. Das Programm könnte ein Ausführungsbeispiel eines Programms gemäß dem zweiten Aspekt der Erfindung sein.

Es könnte beispielsweise in Programmspeicher 212 gespeichert sein. In diesem Fall könnte der Programmspeicher 212 ein Ausführungsbeispiel eines computerlesbaren Speichermediums gemäß dem zweiten Aspekt der Erfindung sein, und der Server 210 oder die Steckkarte 217 könnte ein Ausführungsbeispiel einer erfindungsgemäßen Vorrichtung gemäß dem zweiten Aspekt sein.

Die Vorrichtung 100 und Einrichtungen 200 und 300 aus Figur 1 können in vielfältiger Weise abgewandelt werden, sowohl durch das Weglassen von Komponenten wie auch durch das Hinzufügen von Komponenten. Hierdurch können sich weitere oder alternative Vorteile ergeben.

Die Funktionen der Einrichtung 300 des Nachrichtenzustellers könnten beispielsweise in dem E-POSTBRIEF System der Anmelderin implementiert werden; die Funktionen des Trustcenters könnte beispielsweise im hiervon separaten System Signtrust der Anmelderin implementiert werden; und die bereitgestellten Daten könnten E-Postbriefe sein, die von einem Absender bei einem Webportal des E-POSTBRIEF Systems hinterlegt und dort von einem Empfänger abgerufen werden können.

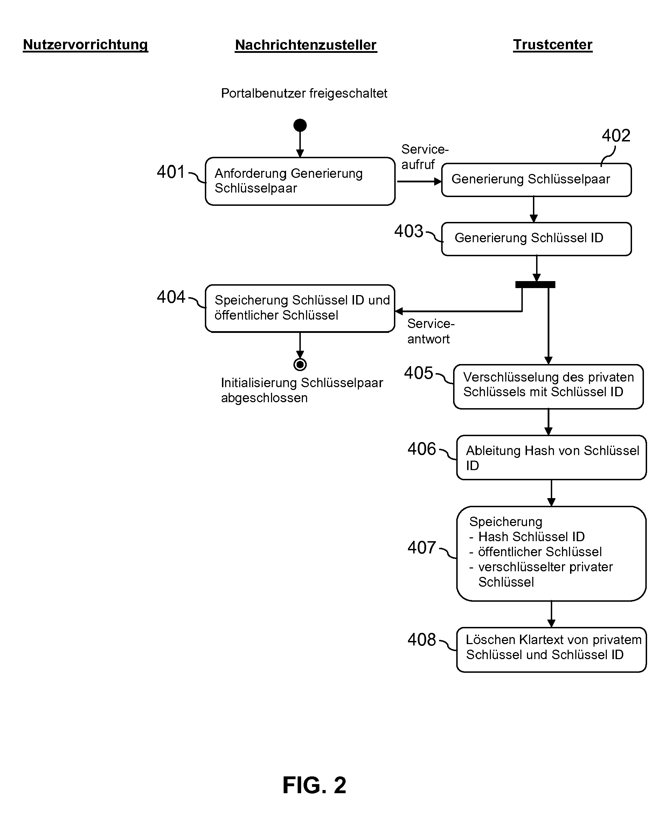

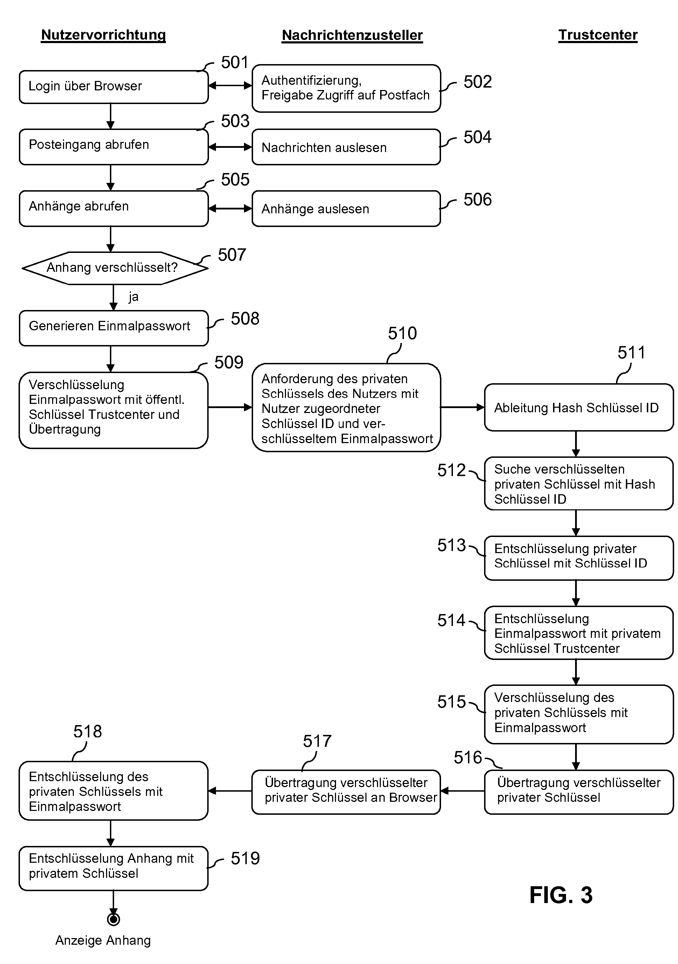

Figuren 2 und 3 sind Ablaufdiagramme, die beispielhafte Ausführungsformen von erfindungsgemäßen Verfahren gemäß dem ersten und zweiten Aspekt illustrieren.

Die gezeigten Aktionen der Nutzervorrichtung 100 werden beispielhaft ausgeführt, wenn der Prozessor 101 ein über einen Browser geladenes und in Arbeitsspeicher 103 gespeichertes Programm ausführt. Die gezeigten Aktionen der Einrichtung 300 des Nachrichtenzustellers werden ausgeführt, wenn der Prozessor 311 ein entsprechendes Programm aus Programmspeicher 312 abruft und ausführt. Die gezeigten Aktionen des Trustcenters 200 werden ausgeführt, wenn der Prozessor 211 ein entsprechendes Programm aus Programmspeicher 212 abruft und ausführt. Die dargestellten Kommunikationen zwischen der Nutzervorrichtung 100, der Einrichtung 300 des Nachrichtenzustellers und dem Trustcenter 200 erfolgt über die jeweilige Kommunikationsschnittstelle 105, 315, 215 unter Nutzung des Internets.

Figur 2 bezieht sich zunächst auf die Erzeugung eines privaten Nutzerschlüssels gemäß dem zweiten Aspekt.

Die Nutzervorrichtung 100 ist hier nicht direkt involviert. Sie beantragt lediglich im Vorfeld eine Freischaltung einer Portalbenutzung, wenn ein Nutzer einen von dem Nachrichtenzusteller bereitgestellten Dienst zur Übermittlung elektronsicher Nachrichten nutzen möchte. Der Nachrichtenzusteller schaltet die Portalbenutzung frei, wenn alle vorgesehenen Bedingungen erfüllt sind, und legt einen Satz Nutzerstammdaten für den Nutzer an. Die Nutzerstammdaten werden im Hauptspeicher 314 gespeichert. Sie können beispielsweise Daten für eine Authentifizierung des Nutzers beinhalten, wie einen Nutzernamen oder eine Nachrichtenzustelladresse und ein Passwort.

Wurde die beantragte Portalbenutzung für einen Nutzer beim Nachrichtenzusteller freigeschaltet, so fordert die Einrichtung 300 des Nachrichtenzustellers automatisch die Generierung eines Schlüsselpaars für eine asymmetrische Verschlüsselung beim Trustcenter an. (Aktion 401)

Das Trustcenter 200 generiert daraufhin ein Schlüsselpaar für den Nutzer ohne externe Vorgaben durch den Nutzer oder den Nachrichtenzusteller. (Aktion 402) Das Schlüsselpaar besteht aus einem privaten Schlüssel und einem öffentlichen Schlüssel, wobei mit dem öffentlichen Schlüssel verschlüsselte Daten nur mit dem privaten Schlüssel wieder entschlüsselt werde können.

Das Trustcenter 200 generiert weiterhin eine eindeutige Schlüsselkennung (Schlüssel ID) für das generierte Schlüsselpaar. (Aktion 403)

Das Trustcenter 200 übermittelt die Schlüsselkennung und den öffentlichen Schlüssel an die Einrichtung 300 des Nachrichtenzustellers, der die beiden Werte in den Nutzerstammdaten für den Nutzer im Hauptspeicher 314 speichert. (Aktion 404) Für den Nachrichtenzusteller ist damit die Initialisierung des Schlüsselpaars für den neuen Nutzer abgeschlossen.

Das Trustcenter 200 verschlüsselt außerdem den privaten Schlüssel des Nutzers mit der Schlüsselkennung. (Aktion 405)

Das Trustcenter 200 leiten einen Hashwert (oder Hash) von der Schlüsselkennung ab. (Aktion 406) Hierzu wird beispielsweise eine perfekte Hashfunktion verwendet, so dass sich für jede mögliche Schlüsselkennung ein anderer Hashwert ergibt.

Das Trustcenter 200 speichert nun einen neuen Datensatz in dem externen Speicher 220. Der Datensatz umfasst den Hashwert der Schlüsselkennung, und diesem zugeordnet den öffentlichen Schlüssel und den verschlüsselten privaten Schlüssel. (Aktion 407)

Schließlich löscht das Trustcenter 200 den Klartext des erzeugten privaten Schlüssels und den Klartext der erzeugten Schlüsselkennung. (Aktion 408)

Damit ist die Initialisierung des Schlüsselpaars auch am Trustcenter 200 abgeschlossen.

Will nun ein Absender dem Nutzer eine elektronische Nachricht mit verschlüsseltem Anhang übermitteln, so kann der Absender den öffentlichen Schlüssel des Nutzers von der Einrichtung 300 anfordern. Die Einrichtung 300 kann den öffentlichen Schlüssel des Nutzers beispielsweise anhand eines angegebenen Nutzernamens oder einer angegebenen Zustelladresse für den Nutzer aus den Nutzerstammdaten aus dem Hauptspeicher 314 auslesen und dem Absender zur Verfügung stellen. Der Absender kann dann eine Datei mit dem öffentlichen Schlüssel Nutzers verschlüsseln, an die Nachricht anhängen und die Nachricht mit Adressierung an den Nutzer an den Nachrichtenzusteller übermitteln.

Alle elektronischen Nachrichten werde unabhängig von der Art der Einlieferung und ihren Inhalten innerhalb der Einrichtung 300 des Nachrichtenzustellers dem Empfängerpostfach zugeordnet und zugriffsgeschützt in Speicher 320 abgelegt.

Figur 3 bezieht sich auf den Abruf einer Nachricht mit verschlüsseltem Anhang durch den Nutzer und den Abruf eines bereits erzeugten und gespeicherten privaten Schlüssels für die Entschlüsselung.

Wenn ein Nutzer Posteingänge abrufen möchte, kann er sich über einen Browser der Nutzervorrichtung 100 bei der Einrichtung 300 des Nachrichtenzustellers einloggen. (Aktion 501) Das Einloggen kann beispielsweise die Eingabe und Übermittlung eines Nutzernamens oder einer Nutzerzustelladresse und eines Passworts umfassen.

Die Einrichtung 300 führt daraufhin eine Authentifizierung durch und gibt nach erfolgreicher Authentifizierung den Zugriff auf ein Postfach des Nutzers frei. (Aktion 502) Die Authentifizierung kann auf Grundlage der in Hauptspeicher 314 gespeicherten Nutzerstammdaten erfolgen. Beispielsweise könnte die Einrichtung 300 überprüfen, ob in den Nutzerstammdaten ein Satz zu dem übermittelten Nutzernamen vorliegt und ob hierzu ein Passwort gespeichert ist, das dem übermittelten Passwort entspricht.

Die Nutzervorrichtung 100 kann daraufhin bei der Einrichtung 300 den Posteingang abrufen. (Aktion 503)

Die Einrichtung 300 liest alle neuen Nachrichten für den Nutzer in Speicher 320 aus und übermittelt sie an die Nutzervorrichtung 100. (Aktion 504) Dort können die Nachrichten angezeigt werden.

Anhänge könnten von der Einrichtung 300 direkt mit ausgelesen und übermittelt werden. Alternativ kann vorgesehen werden, dass der Nutzer die Nutzervorrichtung 100 veranlasst, die Anhänge der angezeigten Nachrichten je nach Bedarf separat abzurufen. (Aktion 505) In dem Fall liest die Einrichtung 300 erst dann die ausgewählten Anhänge aus dem externen Speicher 320 aus und übermittelt sie an die Nutzervorrichtung 100. (Aktion 506) Der Browser der Nutzervorrichtung 100 kann eine Repräsentation der Datei im Arbeitsspeicher 103 vorhalten.

Die Nutzervorrichtung 100 überprüft nun, ob einer der erhaltenen Anhänge verschlüsselt ist. (Aktion 507) Ist dies nicht der Fall, kann der Inhalt des Anhangs unmittelbar ausgegeben werden, beispielsweise über einen Bildschirm, wenn es sich um Text und/oder Bilddaten handelt.

Ist der Anhang verschlüsselt, so benötigt die Nutzervorrichtung 100 für die Entschlüsselung zunächst den privaten Schlüssel des Nutzers. Dieser ist in der Nutzervorrichtung 100 nicht gespeichert.

Die Nutzervorrichtung 100 generiert hierzu einen zufälligen Schlüssel für eine symmetrische Verschlüsselung, welcher als Einmalpasswort oder Transport-PIN (Persönliche Identifikationsnummer) eingesetzt wird. (Aktion 508) Das Einmalpasswort kann automatisch und ohne Einbindung des Nutzers generiert werden und im Arbeitsspeicher 103 vorgehalten werden. Die Nutzervorrichtung 100 verschlüsselt das Einmalpasswort mit einem öffentlichen Schlüssel des Trustcenters 200 und übermittelt ihn an die Einrichtung 300 des Nachrichtenzustellers. (Aktion 509) Der öffentliche Schlüssel kann beispielsweise dauerhaft im Hauptspeicher 104 der Nutzervorrichtung 100 gespeichert sein. Er kann aber beispielsweise auch im Hauptspeicher 314 des Nachrichtenzustellers gespeichert sein und der Nutzervorrichtung 100 über den Browser zur Verfügung gestellt werden. Dies könnte beispielsweise automatisch erfolgen, wenn nach einem Einloggen ein erster Anhang abgerufen wird. Die Nutzervorrichtung 100 könnte den öffentlichen Schlüssel des Trustcenters dann jeweils vorübergehend im Arbeitsspeicher 103 vorrätig halten, solange der Nutzer beim Nachrichtenzusteller eingeloggt ist.

Die Übermittlung des Einmalpassworts an den Nachrichtenzusteller kann zusammen mit einer Aufforderung erfolgen, den privaten Schlüssel des Nutzers vom Trustcenter abzurufen, wobei die Aufforderung in Form eines vorgegebenen Parameterwerts. Alternativ kann die Übermittlung des Einmalpassworts die Aufforderung aber auch implizit erhalten, etwa weil die Übermittlung in einer bestimmten Nachricht oder zu einem bestimmten relativen Zeitpunkt in der Kommunikation zwischen Nutzervorrichtung 100 und Einrichtung 300 des Nachrichtenzustellers erfolgt.

In der Einrichtung 300 wird die dem Nutzer in den Nutzerstammdaten zugeordnete Schlüsselkennung aus dem Hauptspeicher 314 ausgelesen und zusammen mit dem verschlüsselten Einmalpasswort an das Trustcenter 200 weitergeleitet, um den privaten Schlüssel des Nutzers anzufordern. (Aktion 510)

Das Trustcenter 200 leitet einen Hashwert der Schlüsselkennung ab. (Aktion 511) Hierzu wird die gleiche Hashfunktion genutzt wie in Aktion 406 aus Figur 2.

Das Trustcenter 200 sucht in Speicher 220 einen verschlüsselten privaten Schlüssel des Nutzers, der dem Hashwert zugeordnet ist. (Aktion 512)

Das Trustcenter 200 entschlüsselt den privaten Schlüssel des Nutzers mit der Schlüsselkennung. (Aktion 513)

Das Trustcenter 200 liest außerdem den privaten Schlüssel des Trustcenters aus dem Hauptspeicher 214 aus und entschlüsselt das erhaltene Einmalpasswort mit dem privaten Schlüssel des Trustcenters 200. (Aktion 514)

Das Trustcenter 200 kann nun den entschlüsselten privaten Schlüssel des Nutzers mit dem entschlüsselten Einmalpasswort verschlüsseln. (Aktion 515) Die erhaltene Schlüsselkennung und das entschlüsselte private Passwort des Nutzers können nun im Trustcenter 200 wieder gelöscht werden.

Der verschlüsselte private Schlüssel wird vom Trustcenter 200 an die Einrichtung 300 des Nachrichtenzustellers übertragen. (Aktion 516)

Die Einrichtung 300 des Nachrichtenzustellers übermittelt den verschlüsselten privaten Schlüssel an den Browser der Nutzervorrichtung 100. (Aktion 517)

Innerhalb des Browsers der Nutzervorrichtung 100 kann nun der verschlüsselte private Schlüssel des Nutzers mit Hilfe des im Arbeitsspeicher 103 gespeicherten Einmalpassworts entschlüsselt werden. (Aktion 518)

Der private Schlüssel des Nutzers liegt nun im Klartext im Browser vor, und der im Arbeitsspeicher 103 gespeicherte verschlüsselte Anhang kann nun mit diesem privaten Schlüssel entschlüsselt werden. (Aktion 519)

Der Inhalt des entschlüsselten Anhangs kann dann je nach Benutzervorgabe im Hauptspeicher 104 abgespeichert und/oder über die Benutzerschnittstelle 106 ausgegeben werden, beispielsweise durch Anzeige auf einem Bildschirm.

Das Einmalpasswort, die verschlüsselten Anhänge und der private Schlüssel des Nutzers können in dem Arbeitsspeicher 103 gelöscht werden, wenn alle vorliegenden verschlüsselten Anhänge entschlüsselt wurden und/oder wenn sich der Nutzer über den Browser vom Nachrichtenzusteller abmeldet.

Abgesehen von der Anmeldung des Nutzers beim Nachrichtenzusteller könnte das Verfahren aus Figur 3 ganz ohne Eingabe eines Nutzers ablaufen. Es könnte vollständig intransparent und automatisch erfolgen. Das heißt, für den Nutzer wäre es nicht erkennbar, ob eine elektronische Nachricht einen unverschlüsselten Anhang oder einen verschlüsselten Anhang aufweist. Um dem Nutzer aber die Besonderheit der empfangenen Nachricht anzuzeigen und Vertrauen in das Verfahren zu fördern kann vorgesehen werden, den Vorgang der Entschlüsselung und deren Resultat dem Empfänger gut sichtbar aufzuzeigen.

Die Aktionen der Nutzervorrichtung 100 in Figur 3 stellen eine beispielhafte Ausführungsform eines Verfahrens gemäß dem ersten Aspekt der Erfindung dar. Die Aktionen des Trustcenters 200 in Figuren 2 und 3 stellen eine beispielhafte Ausführungsform eines Verfahrens gemäß dem zweiten Aspekt der Erfindung dar.

In beispielhaften Ausführungsformen der Erfindung ist die Schlüsselerzeugung im Trustcenter 200 somit anonym. Hier ist eine Zuordnung eines Schlüssels zu einem Nutzer nicht bekannt, und bei Verwendung einer Hashfunktion oder einer anderen kryptographischen Ableitung liegt selbst die Zuordnung einer Schlüsselkennung zu einem verschlüsselten privaten Schlüssel nur temporär vor. Eine lokale Rekonstruktion der Schlüsselkennung im Trustcenter 200 und damit der Entschlüsselung der privaten Schlüssel von Nutzern ist nicht möglich. Außerdem wird der private Schlüssel (in verschlüsselter Form) ausschließlich im Trustcenter 200 gespeichert. Es erfolgt also eine Trennung zwischen Schlüsselverwaltung und Datenspeicherung, so dass gewährleistet ist, dass keine Partei eigenständig Zugriff auf Schlüssel und Daten erhält. Für einen potentiellen Angreifer bedeutet dies, dass er zumindest in zwei der drei Parteien erfolgreich eindringen und auf die Daten zugreifen können muss, um eine verschlüsselte Nachricht entschlüsseln zu können.

Zusätzlich können sämtliche Daten sowohl in der Einrichtung 300 des Nachrichtenzustellers als auch im Trustcenter 200 durchgehend mit zusätzlichen Systemschlüsseln verschlüsselt gespeichert werden, so dass der Angreifer auch diese in seine Gewalt bringen müsste. Im Browser der Nutzervorrichtung 100 findet in bestimmten Ausführungsformen keinerlei Persistierung von Daten statt. Das bedeutet, dass ein potentieller Angreifer auch hier nur zur Laufzeit versuchen könnte auf Daten im Browser zuzugreifen. Für die eigentliche Übermittlung von Daten in dem System können noch beliebige andere Sicherheitsmaßnahmen vorgesehen werden, wie eine sichere Datenübertragung mittels des Transport Layer Security (TLS) Protokolls im Rahmen einer HyperText Transfer Protocol Secure (HTTPS) Anwendung.

Planerische und organisatorische Maßnahmen durch den Empfänger sind dabei nicht erforderlich, da alle erforderlichen Mittel über einen Browser zur Verfügung gestellt werden können.

Da der Abruf des privaten Schlüssels mittels eines Einmalpassworts als Transport-PIN erfolgt, das unabhängig von einem Nutzerpasswort generiert wird, ist der Ansatz auch unabhängig vom verwendeten Login-Verfahren. Das heißt, es müssen keine Maßnahmen vorgesehen werden, dass das Nutzerpasswort, das dem Nachrichtenzusteller letztendlich beim Login übermittelt wird, zunächst so abgewandelt wird, dass der Nachrichtenzusteller keine Rückschlüsse auf den Transport-PIN ziehen kann.

Es versteht sich, dass die dargestellten und beschriebenen Verfahren im Rahmen der Erfindung in vielfältiger Weise abgewandelt werden können, sowohl durch Hinzufügen, Weglassen, Variieren als auch Vertauschen von einzelnen Aktionen. So könnten beispielsweise Aktionen 513 und 514 auch in umgekehrter Reihenfolge oder parallel zueinander durchgeführt werden. Des Weiteren könnte beispielsweise auf das Anwenden einer Hashfunktion auf die Schlüsselkennung in Aktionen 406 und 511 verzichtet werden. Die Schlüsselkennung könnte dann in Aktion 407 auch im Trustcenter im Klartext gespeichert werden, und in Aktion 512 im Klartext für die Suche nach dem privaten Schlüssel verwendet werden. Ferner kann das Verfahren nicht nur für Anhänge von elektronischen Nachrichten verwendet werden. Es könnte auch eingesetzt werden, wenn die Nachricht selber verschlüsselt werden soll.

Der beispielhaft vorgestellte Ansatz könnte auch für andere Dienste als einen Nachrichtenzustelldienst genutzt werden. Eine zweite Einrichtung - ähnlich der Einrichtung 300 - könnte beispielsweise einem Datenbankanbieter gehören, der Daten für Nutzer im Netz speichert. In dem Fall könnte eine erste Einrichtung - beispielsweise wieder ein Trustcenter - optional statt eines asymmetrischen Schlüsselpaars für einen Nutzer auch einen symmetrischen Schlüssel erzeugen und als geheimen Schlüssel bereithalten. Dies kann im Wesentlichen auf die gleiche Weise erfolgen, wie in Figur 2 dargestellt. Hier wird dann lediglich statt des privaten Schlüssels des Schlüsselpaars ein Schlüssel für eine symmetrische Verschlüsselung erzeugt, verschlüsselt und gespeichert, und die Erzeugung, Übermittlung und Speicherung des öffentlichen Schlüssels entfällt ganz. Die Nutzervorrichtung könnte dann jedes Mal, wenn hinterlegte verschlüsselte Daten ausgelesen werden, den in der ersten Einrichtung gespeicherten Schlüssel für die symmetrische Verschlüsselung abrufen, um die Daten in der Nutzervorrichtung zu entschlüsseln. Dies kann im Wesentlichen auf die gleiche Weise erfolgen, wie in Figur 3 dargestellt. Statt Nachrichten und Anhängen werden hier von der Nutzervorrichtung lediglich Daten aus einem Speicher in der zweiten Einrichtung abgerufen, und statt des privaten Schlüssels des Nutzers wird ein Schlüssel des Nutzers für eine symmetrische Verschlüsselung verwendet. Die Nutzervorrichtung könnte dann auch jedes Mal wenn Daten zum Hinterlegen in der zweiten Einrichtung verschlüsselt werden sollen zunächst auf analoge Weise den in der ersten Einrichtung gespeicherten Schlüssel für die symmetrische Verschlüsselung abrufen.

Die dargestellten oder beschriebenen Verbindungen zwischen Komponenten sind als funktionale Verbindungen zu verstehen. Sie können direkt oder indirekt über mehrere andere Komponenten realisiert werden. Die geschilderten Aktionen können auf verschiedene Art und Weise implementiert werden; so ist eine Implementierung nicht nur in Software (durch Programmanweisungen), sondern auch nur in Hardware oder in einer Kombination von beidem denkbar. Jede der dargestellten Komponenten kann auch durch eine Mehrzahl von Komponenten gebildet werden. So könnte statt jedem Prozessors auch eine Mehrzahl an Prozessoren verwendet werden und anstelle jeder Speicherkomponente eine Mehrzahl an Speicherkomponenten. Mehrere Prozessoren und /oder mehrere Speicherkomponenten könnten auch auf mehrere Server einer jeweiligen Einrichtung verteilt sein.

Es versteht sich, dass die beschriebenen Ausführungsformen lediglich Beispiele sind, die im Rahmen der Ansprüche auf vielfältige Weise modifiziert und/oder ergänzt werden können. Insbesondere kann jedes Merkmal, das für ein bestimmtes Ausführungsbeispiel beschrieben wurde, eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

## Patentansprüche

1. Verfahren ausgeführt von einer Vorrichtung (100), wobei eine erste Einrichtung (200) dazu eingerichtet ist, einen geheimen Schlüssel eines Nutzers der Vorrichtung bereitzustellen und wobei eine zweite Einrichtung (300) dazu eingerichtet ist, Daten für den Nutzer bereitzustellen, das Verfahren umfassend:
- Einloggen bei der zweiten Einrichtung (300) unter Authentifizierung des Nutzers,
- Empfangen von verschlüsselten Daten von der zweiten Einrichtung (300),
- Erzeugen eines Einmalpassworts,
- Verschlüsseln des Einmalpassworts mittels eines öffentlichen Schlüssels der ersten Einrichtung (200),
- Übermitteln des verschlüsselten Einmalpassworts an die zweite Einrichtung (300) und Veranlassen der zweiten Einrichtung (300) mittels des verschlüsselten Einmalpassworts und einer in der zweiten Einrichtung (300) dem Nutzer zugeordneten Schlüsselkennung den geheimen Schlüssel des Nutzers von der ersten Einrichtung (200) abzurufen,
- Empfangen des von der ersten Einrichtung (200) mit dem Einmalpasswort verschlüsselten geheimen Schlüssels des Nutzers von der zweiten Einrichtung (300),
- Entschlüsseln des geheimen Schlüssels des Nutzers mittels des Einmalpassworts, und
- Entschlüsseln der verschlüsselten Daten mittels des geheimen Schlüssels des Nutzers.

2. Verfahren gemäß Anspruch 1, wobei das Einmalpasswort automatisch erzeugt wird, wenn festgestellt wird, dass verschlüsselte Daten von der zweiten Einrichtung (300) empfangen wurden.

3. Verfahren gemäß Anspruch 1 oder 2, wobei die Vorrichtung (100)
- von in einem lokalen Speicher (102) der Vorrichtung (100) gespeicherten und von einem Prozessor (101) der Vorrichtung ausgeführten Programmanweisungen oder
- von über einen Browser erhaltenen und von einem Prozessor (101) der Vorrichtung (100) ausgeführten Programmanweisungen
veranlasst wird, das Verfahren durchzuführen.

4. Vorrichtung (100) umfassend Mittel (101, 102, 103) zur Ausführung des Verfahrens gemäß einem der Ansprüche 1 bis 3.

5. Vorrichtung gemäß Anspruch 4, wobei die Vorrichtung ein Gerät (100) oder ein Modul (107) für ein Gerät (100) ist.

6. Programm umfassend
- Programmanweisungen, wobei die Programmanweisungen bei Ausführung durch einen Prozessor (101) eine Vorrichtung (100) zur Ausführung des Verfahrens gemäß einem der Ansprüche 1 bis 3 veranlassen.

7. Verfahren ausgeführt von einer Vorrichtung (210) einer ersten Einrichtung (200), wobei eine zweite Einrichtung (300) dazu eingerichtet ist, Daten für einen Nutzer bereitzustellen, das Verfahren umfassend:
- Empfangen einer Schlüsselkennung und eines von einer Vorrichtung (100) eines Nutzers generierten und mit einem öffentlichen Schlüssel der ersten Einrichtung (200) verschlüsselten Einmalpassworts von der zweiten Einrichtung (300), die eine Zuordnung zwischen Nutzern und Schlüsselkennungen speichert,
- Auslesen eines mit der Schlüsselkennung verschlüsselten geheimen Schlüssels des Nutzers basierend auf der empfangenen Schlüsselkennung aus einem Speicher (220) der ersten Einrichtung (200),
- Entschlüsseln des verschlüsselten geheimen Schlüssels des Nutzers mittels der Schlüsselkennung,
- Entschlüsseln des verschlüsselten Einmalpassworts mittels eines privaten Schlüssels der ersten Einrichtung (200),
- Verschlüsseln des geheimen Schlüssels des Nutzers mit dem Einmalpasswort, und
- Übermitteln des mit dem Einmalpasswort verschlüsselten geheimen Schlüssels des Nutzers an die zweite Einrichtung (300) zum Weiterleiten an die Vorrichtung (100) des Nutzers, um diesem zu ermöglichen, von der zweiten Einrichtung (300) erhaltene, verschlüsselte Daten zu entschlüsseln.

8. Verfahren gemäß Anspruch 7, ferner umfassend ein kryptografisches Ableiten eines Werts aus der empfangene Schlüsselkennung, wobei der mit der Schlüsselkennung verschlüsselte geheimen Schlüssel des Nutzers in dem Speicher (220) der ersten Einrichtung (200) mit Zuordnung zu einem aus der Schlüsselkennung kryptografisch abgeleitetem Wert abgespeichert ist, und wobei das Auslesen des mit der Schlüsselkennung verschlüsselten geheimen Schlüssels des Nutzers anhand des kryptografisch abgeleiteten Werts der empfangenen Schlüsselkennung erfolgt.

9. Verfahren gemäß einem der Ansprüche 7 und 8, wobei ein gespeicherter verschlüsselter geheimer Schlüssel eines Nutzers von der Vorrichtung (210) der ersten Einrichtung (200) zuvor wie folgt erzeugt wird:
- Empfangen einer Aufforderung von der zweiten Einrichtung (300) einen geheimen Schlüssel für einen Nutzer zu erzeugen,
- Erzeugen eines geheimen Schlüssels für einen Nutzer unabhängig von einer Nutzereingabe,
- Erzeugen einer Schlüsselkennung für den geheimen Schlüssel für den Nutzer,
- Verschlüsseln des geheimen Schlüssels für den Nutzer mit der Schlüsselkennung, und
- Speichern des verschlüsselten geheimen Schlüssels in dem Speicher (220) der ersten Einrichtung (200) für einen Abruf durch eine Vorrichtung (100) des Nutzers über die zweite Einrichtung (300).

10. Verfahren gemäß Anspruch 9, ferner umfassend:
- Senden der Schlüsselkennung an die zweite Einrichtung (300) zum Speichern der Schlüsselkennung mit Zuordnung zu einem Nutzer.

11. Verfahren gemäß einem der Ansprüche 9 oder 10, ferner umfassend:
- kryptografisches Ableiten eines Werts aus der erzeugten Schlüsselkennung,
- Speichern des kryptografisch abgeleiteten Werts in dem Speicher (220) der ersten Einrichtung (200) mit Zuordnung zu dem mit der Schlüsselkennung verschlüsselten geheimen Schlüssel, und
- Löschen der Schlüsselkennung in der ersten Einrichtung (200).

12. Verfahren gemäß einem der Ansprüche 9 bis 11, wobei der geheime Schlüssel
- ein privater Schlüssel eines Schüsselpaars für eine asymmetrische Verschlüsselung oder
- ein Schlüssel für eine symmetrische Verschlüsselung ist.

13. Verfahren gemäß einem der Ansprüche 9 bis 12, wobei der geheime Schlüssel ein privater Schlüssel eines Schlüsselpaars für eine asymmetrische Verschlüsselung ist, ferner umfassend Erzeugen eines öffentlicher Schlüssels für den Nutzer und
- Abspeichern des öffentlichen Schlüssels nur in der ersten Einrichtung (200), oder
- Übermitteln des öffentlichen Schlüssels zur zweiten Einrichtung (300) zum Abspeichern nur in der zweiten Einrichtung (300), oder
- Abspeichern des öffentlichen Schlüssels in der ersten Einrichtung (200) und Übermitteln des öffentlichen Schlüssels zur zweiten Einrichtung (300) zum Abspeichern in der zweiten Einrichtung (300).

14. Verfahren gemäß einem der Ansprüche 9 bis 13, wobei die verschlüsselten Daten
- von einer Vorrichtung eines Dritten verschlüsselt und der zweiten Einrichtung (300) zur Verfügung gestellt wurden, oder
- von einer Vorrichtung des Nutzers verschlüsselt und der zweiten Einrichtung zur Verfügung gestellt wurden.

15. Vorrichtung (210) umfassend Mittel (211, 212) zur Ausführung des Verfahrens gemäß einem der Ansprüche 7 bis 14.

16. Vorrichtung gemäß Anspruch 15, wobei die Vorrichtung ein Server (210) oder ein Modul (217) für einen Server (210) ist.

17. Programm umfassend
- Programmanweisungen, wobei die Programmanweisungen bei Ausführung durch einen Prozessor (211) eine Vorrichtung (210) zur Ausführung des Verfahrens gemäß einem der Ansprüche 7 bis 14 veranlassen.

18. System umfassend eine erste Einrichtung (200) mit einer Vorrichtung (210) gemäß Anspruch 15 oder 16 und einen Speicher (220) zum Speichern einer Mehrzahl von mit Schlüsselkennungen verschlüsselten geheimen Schlüsseln von Nutzern, sowie die zweite Einrichtung (300).

## Claims

1. Method performed by an apparatus (100), wherein a first installation (200) is configured to provide a secret key of a user of the apparatus, and wherein a second installation (300) is configured to provide data for the user, the method comprising:
- logging on to the second installation (300) with authentication of the user,
- receiving encrypted data from the second installation (300),
- creating a one-time password,
- encrypting the one-time password by means of a public key of the first installation (200),
- transmitting the encrypted one-time password to the second installation (300) and causing the second installation (300) to retrieve the secret key of the user from the first installation (200) by means of the encrypted one-time password and a key identification allocated to the user in the second installation (300),
- receiving the secret key of the user, which was encrypted by the first installation (200) with the one-time password, from the second installation (300),
- decrypting the secret key of the user by means of the one-time password and
- decrypting the encrypted data by means of the secret key of the user.

2. Method according to claim 1, wherein the one-time password is created automatically, when it is determined that encrypted data has been received from the second installation (300).

3. Method according to claim 1 or 2, wherein the apparatus (100) is caused to perform the method
- by program instructions stored in a local memory (102) of the apparatus (100) and executed by a processor (101) of the apparatus or
- by program instructions received via a browser and executed by a processor (101) of the apparatus (100).

4. Apparatus (100) comprising means (101, 102, 103) for performing the method according to one of claims 1 to 3.

5. Apparatus according to claim 4, wherein the apparatus is a device (100) or a module (107) for a device (100).

6. Program comprising:
- program instructions, wherein the program instructions when executed by a processor (101) cause an apparatus (100) to perform the method according to one of Claims 1 to 3.

7. Method performed by an apparatus (210) of a first installation (200), wherein a second installation (300) is configured to provide data for a user, the method comprising:
- receiving a key identification and a one-time password, which was generated by an apparatus (100) of a user and encrypted with a public key of the first installation (200), from the second installation (300) which stores an allocation between users and key identifications,
- reading a secret key of the user, which is encrypted with the key identification, based on the received key identification from a memory (220) of the first installation (200),
- decrypting the encrypted secret key of the user by means of the key identification,
- decrypting the encrypted one-time password by means of a private key of the first installation (200),
- encrypting the secret key of the user with the one-time password and
- transmitting the secret key of the user encrypted with the one-time password to the second installation (300) for passing on to the apparatus (100) of the user, in order to enable the user to decrypt encrypted data received from the second installation (300).

8. Method according to claim 7, further comprising cryptographically deriving a value from the received key identification, wherein the secret key of the user encrypted with the key identification is stored in the memory (220) of the first installation (200) with an allocation to a value cryptographically derived from the key identification, and wherein reading the secret key of the user encrypted with the key identification is based on the cryptographically derived value of the received key identification.

9. Method according to one of claims 7 and 8, wherein a stored, encrypted secret key of a user is generated beforehand by the apparatus (210) of the first installation (200) as follows:
- receiving a request from the second installation (300) to generate a secret key for a user,
- generating a secret key for a user independent of a user input,
- generating a key identification for the secret key for the user,
- encrypting the secret key for the user with the key identification and
- storing the encrypted secret key in the memory (220) of the first installation (200) for retrieval by an apparatus (100) of the user via the second installation (300).

10. Method according to claim 9, further comprising:
- sending the key identification to the second installation (300) for storage of the key identification with an allocation to a user.

11. Method according to one of claims 9 and 10, further comprising:
- cryptographically deriving a value from the generated key identification,
- storing the cryptographically derived value in the memory (220) of the first installation (200) with an allocation to the secret key encrypted with the key identification and
- deleting the key identification in the first installation (200).

12. Method according to any one of claims 9 to 11, wherein the secret key
- is a private key of a key pair for asymmetric encryption or
- a key for symmetric encryption.

13. Method according to any one of claims 9 to 12, wherein the secret key is a private key of a key pair for asymmetric encryption, further comprising generating a public key for the user and
- storing the public key in the first installation (200) only, or
- transmitting the public key to the second installation (300) for storage in the second installation (300) only, or
- storing the public key in the first installation (200) and transmitting the public key to the second installation (300) for storage in the second installation (300).

14. Method according to any one of claims 9 to 13, wherein the encrypted data
- was encrypted by a third party apparatus and made available to the second installation (300), or
- was encrypted by a user apparatus and made available to the second installation.

15. Apparatus (210) comprising means (211, 212) for performing the method according to any one of claims 7 to 14.

16. Apparatus according to claim 15, wherein the apparatus is a server (210) or a module (217) for a server (210).

17. Program comprising:
- program instructions, wherein the program instructions when executed by a processor (211) cause an apparatus (210) to perform the method according to any one of claims 7 to 14.

18. System comprising a first installation (200) having an apparatus (210) according to claim 15 or 16 and a memory (220) for storing a plurality of secret keys of users encrypted with key identifications, as well as the second installation (300).

## Revendications

1. Procédé exécuté par un dispositif (100), sachant qu'une première installation (200) est aménagée pour mettre une clé secrète d'un utilisateur du dispositif à la disposition et sachant qu'une deuxième installation (300) est aménagée pour mettre des données pour l'utilisateur à la disposition, le procédé comprenant :
- entrée en communication avec la deuxième installation (300) en authentifiant l'utilisateur,
- réception de données chiffrées de la deuxième installation (300),
- génération d'un mot de passe à usage unique,
- chiffrement d'un mot de passe à usage unique au moyen d'une clé publique de la première installation (200),
- transmission du mot de passe à usage unique chiffré à la deuxième installation (300) et incitation de la deuxième installation (300) à extraire de la première installation (200) la clé secrète de l'utilisateur au moyen du mot de passe à usage unique chiffré et d'un identificateur de clé associé à l'utilisateur dans la deuxième installation (300)
- réception, de la part de la deuxième installation (300), de la clé secrète de l'utilisateur, chiffrée avec le mot de passe à usage unique chiffré dans la première installation (200),
- déchiffrement de la clé secrète de l'utilisateur au moyen du mot de passe à usage unique, et
- déchiffrement des données chiffrées au moyen de la clé secrète de l'utilisateur.

2. Procédé selon la revendication 1, sachant que le mot de passe à usage unique est généré automatiquement quand il est constaté que des données chiffrées ont été reçues par la deuxième installation (300).

3. Procédé selon revendication 1 ou 2, sachant que le dispositif (100) est incité à exécuter le procédé
- par des instructions de programme mémorisées dans une mémoire locale (102) du dispositif (100), et exécutées par un processeur (101) du dispositif, ou
- par des instructions de programme reçues par l'intermédiaire d'un browser et exécutées par un processeur (101) du dispositif (100).

4. Dispositif (100) comprenant des moyens (101, 102, 103) pour l'exécution du procédé selon l'une des revendications 1 à 3,

5. Dispositif selon la revendication 4, sachant que le dispositif est un appareil (100) ou un module (107) pour un appareil (100).

6. Programme comprenant :
- des instructions de programme, sachant que les instructions de programme, lors de l'exécution par un processeur (101), incitent un dispositif (100) à exécuter le procédé selon l'une des revendications 1 à 3.

7. Procédé, exécuté par un dispositif (210) d'une première installation (200), sachant qu'une deuxième installation (300) est aménagée pour mettre des données pour un utilisateur à la disposition, le procédé comprenant :
- réception, de la part de la deuxième installation (300), d'un identificateur de clé et d'un mot de passe à usage unique, généré par un dispositif (100) d'un utilisateur et chiffré avec une clé publique de la première installation (200), qui mémorise une association entre des utilisateurs et des identificateurs de clés,
- lecture d'une clé secrète de l'utilisateur, chiffrée avec l'identificateur de clé, sur la base de l'identificateur de clé reçu à partir d'une mémoire (220) de la première installation (200),
- déchiffrement de la clé secrète, chiffrée de l'utilisateur au moyen de l'identificateur de clé,
- déchiffrement du mot de passe à usage unique chiffré au moyen d'une clé privée de la première installation (200),
- chiffrement de la clé secrète de l'utilisateur avec le mot de passe à usage unique, et
- transmission de la clé secrète de l'utilisateur, chiffrée avec le mot de passe à usage unique, à la deuxième installation (300) pour la transmission au dispositif (100) de l'utilisateur pour permettre à celui-ci de déchiffrer des données chiffrées, reçues de la deuxième installation (300).

8. Procédé selon la revendication 7, comprenant, de plus, une dérivation cryptographique d'une valeur de l'identificateur de clé reçue, sachant que la clé secrète de l'utilisateur, chiffrée avec l'identificateur de clé, est mémorisée dans la mémoire (220) de la première installation (200), avec association à une valeur dérivée cryptographiquement de l'identificateur de clé, et sachant que la lecture de la clé secrète de l'utilisateur, chiffrée avec l'identificateur de clé, est effectuée au moyen de la valeur dérivée cryptographiquement de l'identificateur de clé reçu.

9. Procédé selon l'une des revendications 7 et 8, sachant qu'une clé secrète d'un utilisateur, chiffrée, mémorisée est générée auparavant, par le dispositif (210) de la première installation (200), de la manière suivante :
- réception d'une invitation de la deuxième installation (300) à générer une clé secrète pour un utilisateur,
- génération d'une clé secrète pour un utilisateur indépendamment d'une entrée d'un utilisateur,
- génération d'un identificateur de clé pour la clé secrète pour l'utilisateur,
- chiffrement de la clé secrète pour l'utilisateur avec l'identificateur de clé, et
- mémorisation de la clé secrète, chiffrée, dans la mémoire (220) de la première installation (200) en vue de l'extraction par un dispositif (100) de l'utilisateur par l'intermédiaire de la deuxième installation (300).

10. Procédé selon la revendication 9, comprenant de plus :
- envoi de l'identificateur de clé à la deuxième installation (300) pour la mémorisation de l'identificateur de clé avec association à un utilisateur.

11. Procédé selon l'une des revendications 9 ou 10, comprenant de plus :
- dérivation cryptographique d'une valeur à partir de l'identificateur de clé généré,
- mémorisation de la valeur, résultant de la dérivation cryptographique, dans la mémoire (220) de la première installation (200), avec association à la clé secrète, chiffrée avec l'identificateur de clé, et
- effacement de l'identificateur de clé dans la première installation (200).

12. Procédé selon l'une des revendications 9 à 11, sachant que la clé secrète est
- une clé privée d'une paire de clés pour un chiffrement asymétrique ou
- une clé pour un chiffrement symétrique.

13. Procédé selon l'une des revendications 9 à 12, sachant que la clé secrète est une clé privée d'une paire de clés pour un chiffrement asymétrique,
comprenant de plus la génération d'une clé publique pour l'utilisateur, et
- mémorisation de la clé publique seulement dans la première installation (200), ou
- transmission de la clé publique à la deuxième installation (300) pour la mémorisation seulement dans la deuxième installation (300), ou
- mémorisation de la clé publique dans la première installation (200) et transmission de la clé publique à la deuxième installation (300) pour la mémorisation dans la deuxième installation (300).

14. Procédé selon l'une des revendications 9 à 13, sachant que les données chiffrées
- ont été chiffrées par un dispositif d'un tiers et mises à la disposition de la deuxième installation (300), ou
- ont été chiffrées par un dispositif de l'utilisateur et mises à la disposition de la deuxième installation.

15. Dispositif (210) comprenant des moyens (211, 212) pour l'exécution du procédé selon l'une des revendications 7 à 14.

16. Dispositif selon la revendication 15, sachant que le dispositif est un server (210) ou un module (217) pour un server (210).

17. Programme comprenant :
- des instructions de programme, sachant que les instructions de programme, lors de l'exécution par un processeur (211), incitent un dispositif (210) à exécuter le procédé selon l'une des revendications 7 à 14.

18. Système comprenant une première installation (200) avec un dispositif (210) selon revendication 15 ou 16 et une mémoire (220) pour la mémorisation d'une pluralité de clés secrètes d'utilisateurs, chiffrées au moyen d'identificateurs de clés, ainsi que la deuxième installation (300).
